# EUROPÄISCHE PATENTSCHRIFT

(11) **EP 2 794 387 B1**
(45) Veröffentlichungstag und Bekanntmachung des Hinweises auf die Patenterteilung: **07.10.2015**
(21) Anmeldenummer: 12794290.2
(22) Anmeldetag: 27.11.2012
(51) Int. Cl.: B62D 25/20, B62D 29/00

(54) **AUFBAU FÜR EINEN KRAFTWAGEN, INSBESONDERE EINEN PERSONENKRAFTWAGEN**
STRUCTURE FOR A MOTOR VEHICLE, IN PARTICULAR A PASSENGER VEHICLE
CAISSE DE VÉHICULE À MOTEUR, EN PARTICULIER DE VOITURE

(30) Priorität: 20.12.2011 DE 102011089158
(43) Veröffentlichungstag der Anmeldung: 29.10.2014
(73) Patentinhaber: Bayerische Motoren Werke Aktiengesellschaft, 80809 München (DE)
(72) Erfinder: ECK, Hans-Peter, 85521 Riemerling (DE); RÖHRL, Sabine, 82110 Germering (DE)
(86) Internationale Anmeldenummer: PCT/EP2012/073661
(87) Internationale Veröffentlichungsnummer: WO 2013/092122

(56) Entgegenhaltungen:
- EP-A1- 0 433 903
- DE-A1-102005 024 265
- DE-A1-102008 003 645
- DE-A1-102008 007 689
- DE-A1-102008 056 146
- DE-A1-102010 019 992

## Beschreibung

Die Erfindung betrifft einen Aufbau für einen Kraftwagen, insbesondere einen Personenkraftwagen, gemäß dem Oberbegriff von Patentanspruch 1.

Derartige Aufbauten für Kraftwagen sind aus dem Serienbau von Kraftwagen hinlänglich bekannt. Ein solcher Aufbau umfasst eine Stirnwand, durch welche eine Fahrgastzelle in Fahrzeuglängsrichtung nach vorne hin begrenzt ist. Die Stirnwand erstreckt sich dabei in Fahrzeugquerrichtung zwischen seitlichen Fahrzeugsäulen des Aufbaus. Es hat sich gezeigt, dass ein solcher Aufbau eine verbesserungswürdige Steifigkeit sowie ein verbesserungswürdiges Unfallverhalten aufweist.

Aus der EP 0 433 903 A1 ist bereits ein Aufbau für einen Kraftwagen mit einer eine Fahrgastzelle nach vorne hin begrenzenden Stirnwand bekannt, welche sich zwischen seitlichen Fahrzeugsäulen des Aufbaus erstreckt.

Ferner offenbart die DE 196 33 098 A1 eine Bodengruppe für ein Fahrzeug mit vorderen Längsträgern sowie Längsträgern im mittleren Bereich des Fahrzeugs, die einerseits von an der Fahrzeugaußenseite verlaufenden Schwellern und andererseits von wenigstens einem, im Bereich der Fahrzeugmitte verlaufenden Tunnel gebildet werden. Dabei ist vorgesehen, dass die vorderen Längsträger sowie die Längsträger im mittleren Bereich des Fahrzeugs im Wesentlichen in einer etwa horizontalen Ebene angeordnet sind.

Es ist Aufgabe der vorliegenden Erfindung, einen Aufbau für einen Kraftwagen, insbesondere einen Personenkraftwagen, der eingangs genannten Art derart weiterzuentwickeln, dass der Aufbau eine besonders hohe Steifigkeit und ein besonders vorteilhaftes Unfallverhalten aufweist.

Diese Aufgabe wird durch einen Aufbau für einen Kraftwagen, insbesondere einen Personenkraftwagen, mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Ein solcher Aufbau für einen Kraftwagen, insbesondere einen Personenkraftwagen, umfasst eine Stirnwand, durch welche eine Fahrgastzelle des Kraftwagens in Fahrzeuglängsrichtung nach vorne hin begrenzt ist. Die Stirnwand erstreckt sich zumindest im Wesentlichen in Fahrzeugquerrichtung zwischen seitlichen Fahrzeugsäulen des Aufbaus.

Erfindungsgemäß ist vorgesehen, dass an einer Vorderseite der Stirnwand ein Trägerelement abgestützt ist, welches sich in Fahrzeugquerrichtung erstreckt und die Fahrzeugsäulen zumindest teilweise wenigstens nach vorne hin überdeckt. Ferner ist wenigstens ein Stützelement vorgesehen, welches am Trägerelement, an einem in Fahrzeugquerrichtung äußeren Seitenschweller und einem in Fahrzeugquerrichtung von dem Seitenschweller nach innen hin beabstandeten Tunnelelement des Aufbaus abgestützt ist.

Dabei ist das Tunnelelement durch ein erstes Bodenflächenelement des wenigstens ein zweites Bodenelement umfassenden Fahrzeugbodens des Aufbaus gebildet. Mit anderen Worten sind das erste Bodenflächenelement und das Tunnelelement einstückig miteinander ausgebildet. Dies kommt der Steifigkeit und Festigkeit des Aufbaus zugute.

Dabei ist vorgesehen, dass die Bodenflächenelemente unter Ausbildung eines Aufnahmeraums in Fahrzeughochrichtung übereinander angeordnet sind, wobei das Stützelement zumindest bereichsweise in dem Aufnahmeraum aufgenommen ist.

Infolge der Anordnung des Trägerelements vor der Stirnwand kann das Trägerelement bei einer unfallbedingten Kraftbeaufschlagung des Kraftwagens, insbesondere bei einem Frontalaufprall auf eine Barriere, zunächst unfallbedingte Lasten aufnehmen, abstützen und an in Fahrzeuglängsrichtung dahinter angeordnete Strukturen, wie insbesondere die Fahrzeugsäulen, ableiten. So können die unfallbedingten Lasten zumindest teilweise um die Stirnwand herum geleitet werden, so dass die Stirnwand und damit die Fahrgastzelle vor unerwünschten Beschädigungen geschützt sind.

Das Trägerelement fungiert dabei als Opferbauteil, welches insbesondere unter Energieverzehrung verformt werden und/oder versagen kann. Dadurch können unerwünschte Intrusionen in die Fahrgastzelle vermieden werden.

Das an dem Trägerelement, an dem Seitenschweller und dem Tunnelelement abgestützte Stützelement gewährleistet bei einer unfallbedingten Kraftbeaufschlagung eine vorteilhafte Ableitung und Verteilung der unfallbedingten Lasten von dem Trägerelement in das Tunnelelement und den Seitenschweller. Mit anderen Worten sind durch das Stützelement vorteilhafte Kraft- bzw. Lastpfade geschaffen, über welche die unfallbedingten Lasten zumindest teilweise in den Fahrzeugboden abgeleitet und von der Fahrgastzelle ferngehalten werden können. Der erfindungsgemäße Aufbau weist somit ein besonders vorteilhaftes Unfallverhalten auf, welches dem Schutz von Insassen der Fahrgastzelle zugute kommt.

Ein weiterer Vorteil des erfindungsgemäßen Aufbaus ist, dass dieser durch das Stützelement und dessen Abstützung eine sehr hohe Steifigkeit aufweist. Daraus resultieren sehr gute Fahrdynamikeigenschaften des Kraftwagens.

Durch das Anordnen der Bodenflächenelemente übereinander unter Ausbildung eines Aufnahmeraums in Fahrzeughochrichtung und der Aufnahme des Stützelements zumindest bereichsweise in dem Aufnahmeraum ist eine sehr vorteilhafte Einleitung der unfallbedingten Lasten in den Fahrzeugboden realisiert. Ferner kann der Fahrzeugboden infolge der Aufnahme des Stützelements in dem Aufnahmeraum auf einer in Fahrzeughochrichtung nach oben weisenden Oberseite sowie auf einer in Fahrzeughochrichtung nach unten weisenden Unterseite besonders glatt ausgestaltet werden. Die glatte Unterseite führt zu einer vorteilhaften Aerodynamik des Kraftwagens sowie zur Vermeidung von unerwünschten Windgeräuschen. Die glatte Oberseite ermöglicht es, wenigstens ein korrespondierendes Innenverkleidungsteil zum Verkleiden des Fahrzeugbodens entsprechend glatt und somit zeit- und kostengünstig herzustellen.

Der Fahrzeugboden weist eine Sandwich-Struktur auf, bei welcher die übereinander angeordneten Bodenflächenelemente als Deckschichten der Sandwich-Struktur fungieren. Das zwischen den Deckschichten (Bodenflächenelemente) angeordnete Stützelement fungiert als Kern der Sandwich-Struktur. Der in Sandwich-Bauweise ausgebildete Fahrzeugboden ist somit besonders steif und fest und weist ein nur geringes Gewicht auf.

Vorzugsweise sind der Seitenschweller und die auf dessen Seite angeordnete Fahrzeugsäule zumindest teilweise einstückig miteinander ausgebildet. Dabei werden der Seitenschweller und die zugehörige Fahrzeugsäule durch wenigstens ein einstückiges, sogenanntes Seitenrahmenelement, gebildet, welches vorteilhafterweise zumindest im Wesentlichen aus einem faserverstärkten Kunststoff gebildet ist. Dies kommt der hohen Steifigkeit und Festigkeit sowie einem geringen Gewicht des Aufbaus zugute.

Bei dem erfindungsgemäßen Aufbau handelt es sich vorzugsweise um eine selbsttragende Karosserie für einen Personenkraftwagen.

In vorteilhafter Ausgestaltung sind das Trägerelement und/oder das Stützelement zumindest im Wesentlichen aus einem faserverstärkten Kunststoff gebildet. Das Trägerelement und/oder das Stützelement können somit besonders steif und hinsichtlich ihres Gewichts besonders leicht ausgebildet werden. Der Kunststoff kann mittels Glasfasern und/oder Aramidfasern und/oder insbesondere Kohlefasern verstärkt sein.

Als vorteilhaftes Verfahren zum Herstellen des Trägerelements und/oder des Stützelements eignet sich das sogenannte RTM-Verfahren (RTM - Resin Transfer Moulding), welches auch als Spritzpressverfahren bezeichnet wird. Dieses Verfahren ermöglicht die zeit- und kostengünstige Ausgestaltung des Trägerelements und/oder des Stützelements aus dem faserverstärkten Kunststoff. Darüber hinaus ist es möglich, das Trägerelement und/oder das Stützelement bedarfsgerecht und belastungsangepasst herzustellen, was dem sehr guten Unfallverhalten des erfindungsgemäßen Aufbaus zuträglich ist.

Bei einer weiteren vorteilhaften Ausführungsform der Erfindung ist das Stützelement einstückig ausgebildet. Dies hält die Teileanzahl, das Gewicht sowie den Herstellungsaufwand und damit die Kosten gering. Vorzugsweise ist das Stützelement zumindest im Wesentlichen Y-förmig ausgebildet, wobei ein erster Schenkel der Y-Form am Trägerelement, ein zweiter Schenkel der Y-Form am Seitenschweller und der dritte Schenkel der Y-Form am Tunnelelement abgestützt ist. Durch die miteinander verbundenen Schenkel sind vorteilhafte Lastpfade gebildet, über welche die unfallbedingten Lasten aufgenommen und in den übrigen Aufbau verteilt werden können. Des Weiteren weist das Trägerelement dadurch eine effiziente Formgestaltung auf, was mit deinem geringen Gewicht des Trägerelements einhergeht.

Die Stirnwand weist beispielsweise wenigstens eine Aussparung oder Durchgangsöffnung auf, über welche das einerseits am Tunnelelement und am Seitenschweller abgestützte Stützelement andererseits an dem in Fahrzeuglängsrichtung vor der Stirnwand angeordneten Trägerelement unter Umgehung der Stirnwand abgestützt ist. So können die unfallbedingten Lasten direkt von dem Trägerelement auf das Stützelement und an den Fahrzeugboden weitergeleitet werden.

Das Stützelement kann als Opferbauteil fungieren und bei der unfallbedingten Kraftbeaufschlagung insbesondere unter Energieverzehrung verformt werden und/oder versagen. Zusätzlich zum Trägerelement kann das Stützelement zur Umwandlung von Aufprallenergie in Verformungsenergie beitragen und so die Insassen vor unerwünschten Verletzungen schützen.

Bei einer besonders vorteilhaften Ausführungsform der Erfindung ist die Stirnwand zumindest überwiegend durch das Trägerelement nach vorne hin überdeckt. Das Trägerelement kann dadurch die unfallbedingten Lasten sehr gut aufnehmen, insbesondere an die Fahrzeugsäulen und das Stützelement weiterleiten und so die Stirnwand schützen.

In weiterer vorteilhafter Ausgestaltung ist zwischen dem Trägerelement und dem Stützelement wenigstens ein Zwischenraum gebildet, in welchem ein an dem Trägerelement und an dem Stützelement abgestütztes Überbrückungselement angeordnet ist. Dadurch ist ein weiterer, für das sehr gute Unfallverhalten vorteilhafter Lastpfad geschaffen, über welchen unfallbedingte Lasten vom Trägerelement in das Stützelement und weiter in den Fahrzeugboden übertragen werden können.

Das Überbrückungselement ist vorzugsweise zumindest im Wesentlichen aus einem metallischen Werkstoff, insbesondere Aluminium bzw. einer Aluminiumlegierung, gebildet. Das Überbrückungselement kann auch aus einem Stahl gebildet sein. Das Überbrückungselement weist somit eine sehr gute Duktilität auf, so dass es unter Energieverzehrung verformt werden kann. Somit trägt das Überbrückungselement zur Umwandlung von Aufprallenergie in Verformungsenergie bei. Ferner kann das Überbrückungselement als Strangpressprofil und somit zeit- und kostengünstig ausgebildet sein.

Bei einer weiteren vorteilhaften Ausführungsform der Erfindung weist das Überbrückungselement wenigstens ein Befestigungsmittel auf, an welchem ein Frontmodul, insbesondere ein Hilfsträger des Frontmoduls, und/oder wenigstens ein anderweitiges Anbauteil des Kraftwagens an dem Aufbau befestigbar sind. Das Überbrückungselement ermöglicht eine besonders feste Anbindung des Frontmoduls bzw. des Anbauteils am Aufbau. Ferner ist eine korrosionsgerechte Anbindung des Frontmoduls bzw. Hilfsträgers und/oder des Anbauteils geschaffen, insbesondere wenn das Stützelement und das Trägerelement aus einem faserverstärkten Kunststoff gebildet sind. Das Frontmodul bzw. der Hilfsträger und/oder das Anbauteil können zumindest im Wesentlichen aus einem metallischen Werkstoff gebildet sein.

Das Befestigungsmittel ist beispielsweise eine Einschrauböffnung, in welche eine Schraube zur Anbindung des Frontmoduls bzw. des Hilfsträgers oder des Anbauteils eingeschraubt werden kann. Darüber hinaus können unfallbedingte Lasten von dem Frontmodul oder dem Anbauteil vorteilhaft an das Überbrückungselement übertragen und von diesem über das Stützelement in den Fahrzeugboden eingeleitet werden.

In weiterer besonders vorteilhafter Ausführungsform ist das Trägerelement in zumindest einem ersten Teilbereich an der Stirnwand und in zumindest einem zweiten Teilbereich an den Fahrzeugsäulen abgestützt. Dadurch können die unfallbedingten Lasten besonders vorteilhaft von dem Trägerelement aufgenommen und an die Fahrzeugsäulen weitergeleitet werden. Ferner ist es dadurch möglich, die unfallbedingten Lasten auch teilweise gezielt in die Stirnwand einzuleiten und diese vor einer unerwünschten und unkontrollierten Beschädigung zu schützen. Dies ist insbesondere dann von Vorteil, wenn sich in Fahrzeuglängsrichtung auf einer dem Trägerelement abgewandten Rückseite der Stirnwand ein Abstützungselement anschließt, welches einerseits an der Rückseite der Stirnwand und andererseits am Fahrzeugboden, insbesondere am Tunnelelement, abgestützt ist. Dadurch können die in die Stirnwand eingeleiteten, unfallbedingten Lasten direkt von dem Abstützungselement aufgenommen, von der Stirnwand ab- und in den Fahrzeugboden eingeleitet werden. Dadurch können unerwünschte Beschädigungen und Deformationen der Stirnwand und somit der Fahrgastzelle vermieden werden, so dass die Insassen geschützt sind.

Das aus dem faserverstärkten Kunststoff gebildete Stützelement ist beispielsweise aus wenigstens zwei Fasermatten, insbesondere umgeformten Gelegen, sogenannten Preforms, gebildet, welche mit dem als Matrixwerkstoff fungierenden Kunststoff versehen sind. Mit anderen Worten ist der Kunststoff durch die Fasern der Fasermatten verstärkt. Die Fasermatten können sich dabei hinsichtlich ihrer Fasermattendicken voneinander unterscheiden. Mit anderen Worten ist eine erste der Fasermatten dicker als die zweite Fasermatte. So kann das Stützelement bedarfsgerecht an auftretende Belastungen angepasst werden, was mit einem geringen Gewicht sowie mit einem sehr vorteilhaften Unfallverhalten des Aufbaus einhergeht.

Alternativ oder zusätzlich kann vorgesehen sein, dass das Stützelement in einem ersten Teilbereich eine erste Wanddicke aufweist, die größer ist als eine zweite Wanddicke in einem sich an den ersten Teilbereich anschließenden zweiten Teilbereich. Dadurch ist das Trägerelement lokal, d.h. zumindest in dem ersten Teilbereich, verstärkt und dadurch lokal den auftretenden Belastungen angepasst.

Die erste, als die zweite Wanddicke größere Wanddicke kann beispielsweise durch den Kunststoff gebildet sein, der im ersten Teilbereich dicker als im zweiten Teilbereich ist. Alternativ oder zusätzlich ist es möglich, dass im ersten Teilbereich eine größere Anzahl an Fasermatten-Schichten vorgesehen ist als im zweiten Teilbereich. Ist das Stützelement beispielsweise aus wenigstens einer ersten Fasermatte gebildet, so ist beispielsweise lediglich im ersten Teilbereich wenigstens eine zweite Fasermatte vorgesehen, welche in Überdeckung mit der ersten Fasermatte angeordnet ist. Somit sind im ersten Teilbereich zwei Fasermatten-Schichten gebildet, während im zweiten Teilbereich lediglich eine Fasermatten-Schicht vorgesehen ist. Auf diese Weise ist das Stützelement im ersten Teilbereich somit lokal effizient verstärkt.

Die zwei Fasermatten-Schichten sind beispielsweise durch die zwei Fasermatten bzw. Preforms gebildet, aus denen das Stützelement hergestellt ist und welche sich in wenigstens einem Überlappungsbereich gegenseitig überlappen. In diesem Überlappungsbereich sind die Fasermatten miteinander verbunden. Durch entsprechende Anordnung des Überlappungsbereichs und Ausrichtung des Stützelements in seinem verbauten Zustand kann entsprechend der Überlappungsbereich in einem vorteilhaften Bereich des Aufbaus positioniert werden, um dort unfallbedingte Lasten effizient aufnehmen, abstützen und in den Fahrzeugboden einleiten zu können.

Bei einer weiteren vorteilhaften Ausführungsform der Erfindung sind die Bodenflächenelemente und/oder das Tunnelelement und/oder die Stirnwand und/oder die Fahrzeugsäulen und/oder der Seitenschweller zumindest im Wesentlichen aus einem faserverstärkten Kunststoff gebildet. Dies führt zu einem sehr geringen Gewicht des erfindungsgemäßen Aufbaus bei gleichzeitiger Realisierung einer sehr hohen Steifigkeit.

Vorzugsweise ist wenigstens ein weiteres Stützelement vorgesehen, wobei das erste Stützelement bezogen auf die Fahrzeugquerrichtung auf der linken Seite des Tunnelelements und das weitere Stützelement auf der rechten Seite des Tunnelelements angeordnet ist. Dies führt zu einer sehr hohen Steifigkeit des erfindungsgemäßen Aufbaus sowie zu einer vorteilhaften Ableitung von unfallbedingten Lasten von dem Trägerelement in den Fahrzeugboden. Dabei können die Stützelemente zumindest im Wesentlichen spiegelsymmetrisch zueinander ausgebildet sein. Dadurch ist eine gleichmäßige Abstützung und Weiterleitung von unfallbedingten Kräften ermöglicht. Es versteht sich, dass das zuvor zu dem ersten Stützelement Geschilderte ohne weiteres auch auf das weitere Stützelement anwendbar ist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ausschnittsweise eine schematische Draufsicht eines Aufbaus für einen Personenkraftwagen;
- Fig. 2: ausschnittsweise eine weitere schematische Draufsicht des Aufbaus gemäß Fig. 1, wobei ein erstes, links von einem Mitteltunnel des Aufbaus angeordnetes Stützelement sowie ein zweites, rechts von dem Mitteltunnel angeordnetes und zum ersten Stützelement spiegelsymmetrisch ausgebildetes Stützelement vorgesehen ist, die jeweils an einem vor einer Stirnwand des Aufbaus angeordneten Trägerelement des Aufbaus, an dem Mitteltunnel und an jeweiligen Seitenschwellern des Aufbaus abgestützt sind;
- Fig. 3: ausschnittsweise eine weitere schematische Draufsicht des Aufbaus gemäß Fig. 2;
- Fig. 4: ausschnittsweise eine schematische Perspektivansicht des Aufbaus gemäß Fig. 3;
- Fig. 5: ausschnittsweise eine schematische Schnittansicht des Aufbaus gemäß Fig. 4;
- Fig. 6: ausschnittsweise eine schematische Längsschnittansicht des Aufbaus gemäß den Fig. 4 und 5; und
- Fig. 7: ausschnittsweise eine schematische Schnittansicht des Aufbaus gemäß Fig. 5.

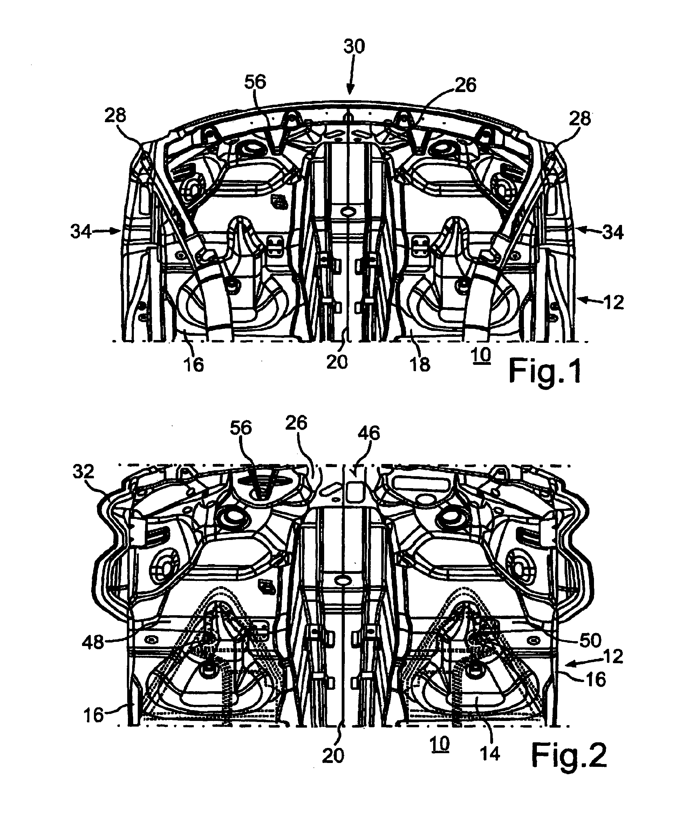

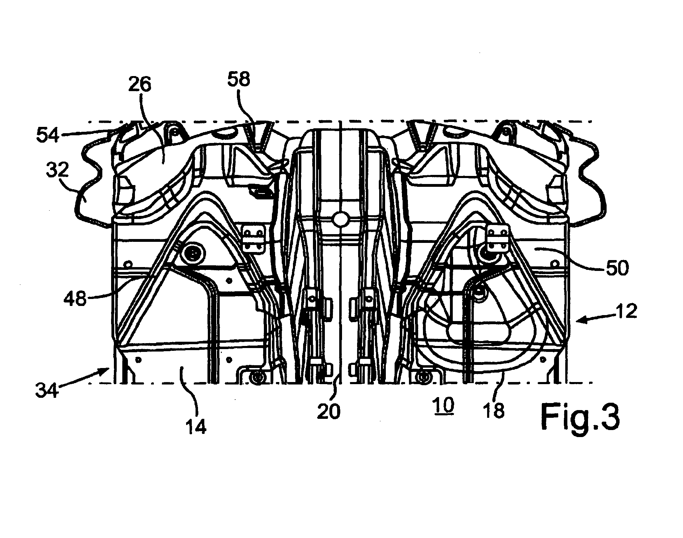

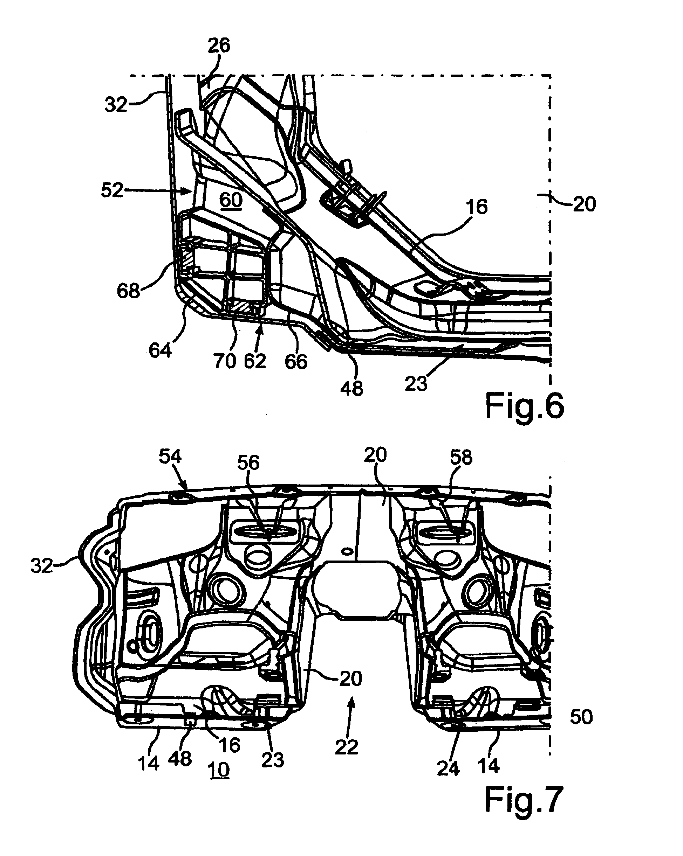

Die Fig. 1 zeigt einen Aufbau 10 für einen Personenkraftwagen, welcher vorliegend als selbsttragende Karosserie ausgebildet ist. Der Aufbau 10 weist einen Fahrzeugboden 12 mit einer Bodenunterschale 14 (Fig. 3), einer in Vorwärtsfahrtrichtung und bezogen auf die Fahrzeugquerrichtung linken Bodenoberschale 16 und einer rechten Bodenoberschale 18 auf. Die Bodenunterschale 14 und die Bodenoberschalen 16, 18 sind jeweils aus einem faserverstärkten Kunststoff, insbesondere aus einem kohlefaserverstärkten Kunststoff, gebildet. Durch die Bodenunterschale 14 ist ein Mitteltunnel 20 des Aufbaus 10 gebildet, der einen Aufnahmeraum 22 (Fig. 7) bereitstellt.

Der Aufnahmeraum 22 dient zur Aufnahme wenigstens einer elektrischen Speichereinrichtung. Mittels der elektrischen Speichereinrichtung kann wenigstens ein Elektromotor des Personenkraftwagens mit elektrischem Strom versorgt werden. Der Elektromotor dient dabei zum Antreiben des Personenkraftwagens. Der Personenkraftwagen kann somit als Hybrid-Fahrzeug oder als Elektrofahrzeug ausgebildet sein und emissionsarm bzw. emissionsfrei angetrieben werden.

Wie in Zusammenschau mit den Fig. 2 bis 7 erkennbar ist, sind die Bodenunterschale 14 und die Bodenoberschalen 16, 18 unter Ausbildung jeweiliger Zwischenräume 23, 24 in Fahrzeughochrichtung übereinander angeordnet. Dadurch weist der Fahrzeugboden 12 eine Sandwich-Struktur auf, welche zu einem besonders geringen Gewicht sowie zu einer hohen Steifigkeit des Fahrzeugbodens 12 führt.

Der Aufbau 10 weist ferner eine Stirnwand 26 auf, durch welche eine Fahrgastzelle 29 des Personenkraftwagens bzw. des Aufbaus 10 in Fahrzeuglängsrichtung nach vorne hin begrenzt ist. Die Stirnwand 26 erstreckt sich in Fahrzeugquerrichtung zwischen seitlichen Fahrzeugsäulen 28, welche vorliegend A-Säulen des Aufbaus 10 sind.

An einer Vorderseite 30 der Stirnwand 26 ist ein in Fahrzeuglängsrichtung vor der Stirnwand 26 angeordnetes und von der Stirnwand 26 separat ausgebildetes Trägerelement 32 abgestützt, welches sich in Fahrzeugquerrichtung erstreckt und die Fahrzeugsäulen 28 in Fahrzeuglängsrichtung nach vorne hin überdeckt. Dabei ist das Trägerelement 32 auch an den Fahrzeugsäulen 28 sowie an Seitenschwellern 34 des Aufbaus 10 abgestützt.

Infolge der großflächigen Überdeckung der Stirnwand 26, der Fahrzeugsäulen 28 und der Seitenschweller 34 sowie der Abstützung des Trägerelements 32 an der Stirnwand 26, an den Fahrzeugsäulen 28 und an den Seitenschwellern 34 kann das Trägerelement 32 bei einer unfallbedingten Kraftbeaufschlagung, insbesondere bei einem Frontalaufprall des Personenkraftwagens auf eine Barriere, unfallbedingte Lasten aufnehmen und insbesondere in die Fahrzeugsäulen 28 und die Seitenschweller 34 einleiten. Die unfallbedingten Lasten können somit zumindest überwiegend von der Stirnwand 26 ferngehalten werden, so dass eine unerwünschte Beschädigung der Stirnwand 26 und der Fahrgastzelle 29 vermieden werden kann.

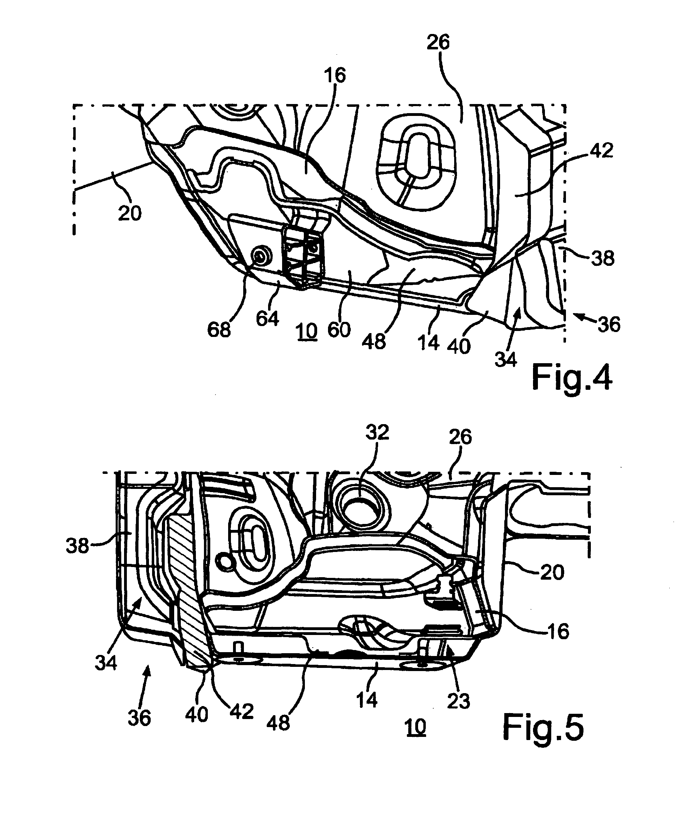

Wie insbesondere der Fig. 5 zu entnehmen ist, sind die Seitenschweller 34 und die Fahrzeugsäulen 28 zumindest teilweise einstückig miteinander und durch jeweilige Seitenrahmenelemente 36 ausgebildet. Die Seitenrahmenelemente 36 umfassen dabei ein jeweiliges Seitenrahmenaußenteil 38 und ein Seitenrahmeninnenteil 40. Das Seitenrahmeninnenteil 40 weist ein Flechtprofil 42 mit einem Schaumkernelement auf, welches mit Fasern umflochten ist. Das Flechtprofil 42 ist ferner mit einem Kunststoff versehen, wodurch das Seitenrahmeninnenteil aus einem faserverstärkten Kunststoff gebildet ist. Auch das Seitenrahmenaußenteil 38, welches die Fahrzeugsäule 28 zumindest teilweise bildet, ist aus einem faserverstärkten Kunststoff hergestellt. Auch die Fahrzeugsäulen 28, die Stirnwand 26 sowie das Trägerelement 32 sind aus einem faserverstärkten Kunststoff gebildet.

Im linken Zwischenraum 23 zwischen der Bodenunterschale 14 und der linken Bodenoberschale 16 ist ein erstes Stützelement 48 angeordnet. Entsprechend dazu ist auch im rechten Zwischenraum 24 zwischen der Bodenunterschale 14 und der rechten Bodenoberschale 18 ein zweites Stützelement 50 angeordnet. Wie der in der Fig. 3 gezeigten Draufsicht zu entnehmen ist, sind die Stützelemente 48, 50 zumindest im Wesentlichen Y-förmig ausgebildet und einerseits an dem Trägerelement 32 und andererseits an den Seitenschwellern 34 und dem Mitteltunnel 20 abgestützt. Dadurch können die unfallbedingten Lasten, welche zunächst von dem Trägerelement 32 aufgenommen werden, direkt an die Stützelemente 48, 50 weiter- und in den Fahrzeugboden 12 über den Mitteltunnel 20 und die Seitenschweller 34 eingeleitet werden. Die unfallbedingten Lasten werden zumindest teilweise, insbesondere zumindest überwiegend, auf diese Weise an der Stirnwand 26 vorbei und großflächig in den Fahrzeugboden 12 eingeleitet, so dass unerwünschte Intrusionen der Fahrgastzelle 29 vermieden werden können. Dies kommt dem Schutz von Insassen der Fahrgastzelle 29 zugute. Darüber hinaus ist der Aufbau 10 durch die geschilderte Abstützung der Stützelemente 48, 50 effizient ausgesteift, was zu sehr guten Fahrdynamikeigenschaften des Personenkraftwagens führt.

Wie insbesondere der Fig. 6 zu entnehmen ist, weist die Stirnwand 26 jeweilige Aussparungen 52 auf, wodurch die Stützelemente 48, 50 einerseits direkt am Trägerelement 32 und andererseits direkt an den Seitenschwellern 34 und dem Mitteltunnel 20 abgestützt sein können.

Zur Darstellung einer festen, leichten und großflächigen Verbindung ist das Trägerelement 32 mit der Stirnwand 12, mit den Seitenschwellern 34 und mit den Fahrzeugsäulen 28 verklebt. Ebenso sind auch die Stützelemente 48, 50 mit dem Trägerelement 32, mit den Seitenschwellern 34, dem Mitteltunnel 20 und den Bodenoberschalen 16, 18 verklebt. Auch die Stützelemente 48, 50 sind aus einem jeweiligen, faserverstärkten Kunststoff, insbesondere kohlefaserverstärkten Kunststoff, gebildet. Dadurch weisen die Stützelemente 48, 50 eine sehr hohe Steifigkeit sowie ein sehr geringes Gewicht auf.

Die Stirnwand 26 ist zudem mit einem aus einem faserverstärkten Kunststoff gebildeten Stirnwandquerträger 54 versehen, mit welchem das Trägerelement 32 verklebt ist und welches zumindest bereichsweise in Fahrzeuglängsrichtung nach vorne hin durch das Trägerelement 32 überdeckt ist. So können die unfallbedingten Lasten zumindest teilweise auch in den Stirnwandquerträger 54 eingeleitet und von der Stirnwand 26 ferngehalten werden. Am Stirnwandquerträger 54 sind Konsolen 56, 58 angebunden, welche zur Halterung von Fußpedalen dienen. Dabei ist die Konsole 56 dem als linksgesteuerten Personenkraftwagen ausgebildeten Personenkraftwagen zugeordnet, während die Konsole 58 dem als rechts-gesteuerten Personenkraftwagen ausgebildeten Personenkraftwagen zugeordnet ist.

Zwischen dem Trägerelement 32 und den Stützelemente 48, 50 sind jeweilige Zwischenräume 60 gebildet, in welchen jeweilige Überbrückungselemente 62 angeordnet sind. Die Überbrückungselemente 62 sind einerseits an dem Trägerelement 32 abgestützt, beispielsweise mit diesem verklebt. Andererseits sind die Überbrückungselemente 62 an den Stützelementen 48, 50 abgestützt, beispielsweise mit diesen verklebt.

Die Überbrückungselemente 62 umfassen ein jeweiliges Aluminium-Strangpressprofil 64 und einen Blechschuh 66. Dies bedeutet, dass die Überbrückungselemente 62 zumindest im Wesentlichen aus einem metallischen Werkstoff bzw. aus metallischen Werkstoffen gebildet sind und somit eine hohe Festigkeit und Duktilität aufweisen, so dass sie bei einer unfallbedingten Kraftbeaufschlagung des Kraftwagens unter Energieverzehrung verformbar sind und somit zur Umwandlung von Aufprallenergie in Verformungsenergie zum Schutze der Insassen beitragen.

Die Aluminium-Strangpressprofile 64 weisen darüber hinaus Befestigungsmittel in Form von Einschrauböffnungen 68, 70 auf. In die Einschrauböffnungen 68 können jeweilige Schrauben in Fahrzeuglängsrichtung (x-Richtung) eingeschraubt werden. Die Einschrauböffnungen 68 dienen zur Anbindung eines Frontmoduls an den Aufbau 10. In die Einschrauböffnungen 70 können jeweilige Schrauben zumindest im Wesentlichen in Fahrzeughochrichtung (z-Richtung) eingeschraubt werden. Auch die Einschrauböffnungen 70 dienen zur Anbindung des Frontmoduls an den Aufbau. Insbesondere kann über die Einschrauböffnungen 70.ein Hilfsträger des Frontmoduls an den Aufbau 10 angebunden werden. Der Hilfsträger dient zur Lagerung des Elektromotors und wenigstens eines Lenkerelements eines Fahrwerks des Personenkraftwagens, über das Räder am Hilfsträger über diesem am Aufbau 10 gehalten werden kann.

Über die Überbrückungselemente 62 können auch unfallbedingte Lasten vom Frontmodul bzw. dessen Hilfsträger aufgenommen und in den Fahrzeugboden 12 über die Stützelemente 48, 50 eingeleitet werden, wodurch die Stirnwand 26 und damit die Fahrgastzelle 29 sehr gut vor unerwünschten Beschädigungen geschützt werden können.

### Bezugszeichenliste

- 10: Aufbau
- 12: Fahrzeugboden
- 14: Bodenunterschale
- 16: linke Bodenoberschale
- 18: rechte Bodenoberschale
- 20: Mitteltunnel
- 22: Aufnahmeraum
- 23: linker Zwischenraum
- 24: rechter Zwischenraum
- 26: Stirnwand
- 28: Fahrzeugsäule
- 29: Fahrgastzelle
- 30: Vorderseite
- 32: Trägerelement
- 34: Seitenrahmen
- 36: Seitenrahmenelement
- 38: Seitenrahmenaußenteil
- 40: Seitenrahmeninnentell
- 42: Flechtprofil
- 46: Rückseite
- 48: linkes Stützelement
- 50: rechtes Stützelement
- 52: Aussparung
- 54: Stirnwandquerträger
- 56: Konsole
- 58: Konsole
- 60: Zwischenraum
- 62: Überbrückungselement
- 64: Aluminium-Strangpressprofil
- 66: Blechschuh
- 68: Einschrauböffnung
- 70: Einschrauböffnung

## Patentansprüche

1. Aufbau (10) für einen Kraftwagen, insbesondere einen Personenkraftwagen, mit einer eine Fahrgastzelle (29) nach vorne hin begrenzenden Stirnwand (26), welche sich zwischen seitlichen Fahrzeugsäulen (28) des Aufbaus (10) erstreckt, wobei an einer Vorderseite (30) der Stirnwand (26) ein Trägerelement (32) abgestützt ist, welches sich in Fahrzeugquerrichtung erstreckt und die Fahrzeugsäulen (28) zumindest teilweise überdeckt, wobei wenigstens ein Stützelement (48, 50) vorgesehen ist, welches am Trägerelement (32), an einem Seitenschweller (34) und an einem in Fahrzeugquerrichtung von dem Seitenschweller (34) nach innen hin beabstandeten. Tunnelelement (20) des Aufbaus (10) abgestützt ist, **dadurch gekennzeichnet, daß** das Tunnelelement (20) durch ein erstes Bodenflächenelement (14) eines wenigstens ein zweites Bodenflächenelement (16, 18) umfassenden Fahrzeugbodens (12) des Aufbaus (10) gebildet ist, wobei die Bodenflächenelemente (14, 16, 18) unter Ausbildung wenigstens eines Aufnahmeraums (23, 24) in Fahrzeughochrichtung übereinander angeordnet sind, und wobei das Stützelement (48, 50) zumindest bereichsweise in dem Aufnahmeraum (23, 24) aufgenommen ist.

2. Aufbau (10) nach Anspruch 1, **dadurch gekennzeichnet, dass** das Trägerelement (32) und/oder das Stützelement (48, 50) zumindest im Wesentlichen aus einem faserverstärkten Kunststoff gebildet ist.

3. Aufbau (10) nach einem der Ansprüche 1 oder 2, **dadurch gekennzeichnet, dass** das Stützelement (48, 50) einstückig ausgebildet ist.

4. Aufbau (10) nach einem der vorhergehenden Ansprüche, **dadurch gekennzeichnet, dass** die Stirnwand (26) zumindest überwiegend durch das Trägerelement (32) überdeckt ist.

5. Aufbau (10) nach einem der vorhergehenden Ansprüche, **dadurch gekennzeichnet, dass** zwischen dem Trägerelement (32) und dem Stützelement (48, 50) wenigstens ein Zwischenraum (60) gebildet ist, in welchem ein an dem Trägerelement (32) und an dem Stützelement (48, 50) abgestütztes Überbrückungselement (62) angeordnet ist.

6. Aufbau (10) nach Anspruch 5, **dadurch gekennzeichnet, dass** das Überbrückungselement (62) zumindest im Wesentlichen aus einem metallischen Werkstoff gebildet ist.

7. Aufbau (10) nach Anspruch 6, **dadurch gekennzeichnet, dass** das Überbrückungselement (62) wenigstens ein Befestigungsmittel (68, 70) aufweist, an welchem ein Frontmodul, insbesondere ein Hilfsträger des Frontmoduls, des Kraftwagens an dem Aufbau (10) befestigbar ist.

8. Aufbau (10) nach einem der vorhergehenden Ansprüche, **dadurch gekennzeichnet, dass** das Stützelement (48, 50) mit dem Seitenschweller (34) und/oder mit dem Trägerelement (32) und/oder mit dem Tunnelelement (20) und/oder mit zumindest einem der Bodenflächenelemente (14, 16, 18) verklebt ist.

9. Aufbau (10) nach einem der vorhergehenden Ansprüche, **dadurch gekennzeichnet, dass** das Trägerelement (32) in zumindest einem ersten Teilbereich an der Stirnwand (26) und in zumindest einem zweiten Teilbereich an den Fahrzeugsäulen (28) abgestützt ist.

10. Aufbau (10) nach einem der vorhergehenden Ansprüche, **dadurch gekennzeichnet, dass** die Bodenflächenelemente (14, 16, 18) und/oder das Tunnelelement (20) und/oder die Stirnwand (26) und/oder die Fahrzeugsäulen (28) und/oder der Seitenschweller (34) zumindest im Wesentlichen aus einem faserverstärkten Kunststoff gebildet sind.

## Claims

1. A structure (10) for a motor vehicle, especially a passenger vehicle, with an end wall (26) limiting a passenger cell (29) to the front, which end wall extends between lateral vehicle columns (28) of the structure (10), wherein a carrier element (32) is supported on a front side (30) of the end wall (26), which carrier element extends in the transverse direction of the vehicle and at least partly covers the vehicle columns (28), wherein at least one support element (48, 50) is provided, which is supported on the carrier element (32), on a side sill (34) and on a tunnel element (20) of the structure (10), which is spaced apart inwardly in the transverse direction of the vehicle from the side sill (34), **characterised in** the tunnel element (20) is formed by a first base face element (14) of a vehicle base (12) of the structure (10) comprising at least a second base face element (16, 18), wherein the base face elements (14, 16, 18) are arranged one above the other in the vehicle height direction with the formation of at least one receiving space (23, 24), and wherein the support element (48, 50) is received, at least in regions, in the receiving space (23, 24).

2. A structure (10) according to claim 1, **characterised in that** the carrier element (32) and/or the support element (48, 50) is at least substantially formed from a fibre-reinforced plastics material.

3. A structure (10) according to either of claims 1 or 2, **characterised in that** the support element (48, 50) is configured in one piece.

4. A structure (10) according to any one of the preceding claims, **characterised in that** the end wall (26) is covered at least predominantly by the carrier element (32).

5. A structure (10) according to any one of the preceding claims, **characterised in that** at least one intermediate space (60), in which a bridging element (62) supported on the carrier element (32) and on the support element (48, 50) is arranged, is formed between the carrier element (32) and the support element (48, 50).

6. A structure (10) according to claim 5, **characterised in that** the bridging element (62) is formed at least substantially from a metallic material.

7. A structure (10) according to claim 6, **characterised in that** the bridging element (62) has at least one fastening means (68, 70), on which a front module, especially an auxiliary carrier of the front module, of the motor vehicle can be fastened to the structure (10).

8. A structure (10) according to any one of the preceding claims, **characterised in that** the support element (48, 50) is glued to the side sill (34) and/or to the carrier element (32) and/or to the tunnel element (20) and/or to at least one of the base face elements (14, 16, 18).

9. A structure (10) according to any one of the preceding claims, **characterised in that** the carrier element (32), in at least one first part region, is supported on the end wall (26) and, in at least one second part region, is supported on the vehicle columns (28).

10. A structure (10) according to any one of the preceding claims, **characterised in that** base face elements (14, 16, 18) and/or the tunnel element (20) and/or the end wall (26) and/or the vehicle columns (28) and/or the side sill (34) are formed at least substantially from a fibre-reinforced plastics material.

## Revendications

1. Structure de carrosserie (10) pour un véhicule, en particulier un véhicule de tourisme comprenant une paroi frontale (26) limitant vers l'avant la cellule passagers (29) qui s'étend entre colonnes (28) de la structure (10), dans laquelle, sur le côté avant (30) de la paroi frontale (26) s'appuie un élément porteur (32) qui s'étend dans la direction transversale du véhicule et recouvre au moins partiellement les colonnes (28) du véhicule, il est prévu au moins un élément-porteur (48, 50) qui s'appuie sur l'élément porteur (32), sur un marchepied latéral (34) et un élément tunnel (20) de la structure (10) écartée vers l'intérieur,
**caractérisée en ce que**
l'élément tunnel (20) est formé par un premier élément de surface de plancher (14) du plancher (12) de la structure (10) qui comprend au moins un second élément de surface de plancher (16, 18), les éléments de surface de plancher (14, 16, 18) étant superposés en formant au moins un espace de réception (23, 24) dans la direction de la hauteur du véhicule, et l'élément-support (48, 50) étant logé au moins par zone dans cet espace de réception (23, 24).

2. Structure (10) conforme à la revendication 1,
**caractérisée en ce que**
l'élément porteur (32) et/ou l'élément support (48, 50) est réalisé au moins essentiellement en un matériau synthétique renforcé par des fibres.

3. Structure (10) conforme à l'une des revendications 1 et 2,
**caractérisée en ce que**
l'élément support (48, 50) est réalisé en une seule pièce.

4. Structure (10) conforme à l'une des revendications précédentes,
**caractérisée en ce que**
la paroi frontale (26) est recouverte au moins dans sa plus grande partie par l'élément porteur (32).

5. Structure (10) conforme à l'une des revendications précédentes,
**caractérisée en ce qu'**
entre l'élément porteur (32) et l'élément support (48, 50) est formé au moins un espace intermédiaire (60) dans lequel est monté un élément de pontage (62) s'appuyant sur l'élément porteur (32) et sur l'élément support (48, 50).

6. Structure (10) conforme à la revendication 5,
**caractérisée en ce que**
l'élément de pontage (62) est réalisé au moins essentiellement en un matériau métallique.

7. Structure (10) conforme à la revendication 6,
**caractérisée en ce que**
l'élément de pontage (62) comprend au moins un moyen de fixation (68, 70) sur lequel peut être fixé un module frontal, en particulier un support auxiliaire du module frontal du véhicule sur la structure (10).

8. Structure (10) conforme à l'une des revendications précédentes,
**caractérisée en ce que**
l'élément support (48, 50) est collé au marchepied (34) et/ou à l'élément porteur (32) et/ou à l'élément tunnel (20) et/ou à au moins l'un des éléments de surface de plancher (14, 16, 18).

9. Structure (10) conforme à l'une des revendications précédentes,
**caractérisée en ce que**
l'élément porteur (32) s'appuie dans au moins une première zone partielle sur la paroi frontale (26) et dans au moins une seconde zone frontale sur les colonnes (28) du véhicule.

10. Structure (10) conforme à l'une des revendications précédentes,
**caractérisée en ce que**
les éléments de surface de plancher (14, 16, 18) et/ou l'élément tunnel (20) et/ou la paroi frontale (26) et/ou les colonnes (28) du véhicule et/ou les marchepieds (34) sont réalisés au moins essentiellement en un matériau synthétique renforcé par des fibres.
